# EUROPEAN PATENT APPLICATION

(11) **EP 4 063 942 A1**
(43) Date of publication of application: **28.09.2022**
(21) Application number: 21305376.2
(22) Date of filing: 25.03.2021
(51) Int. Cl.: G02C 7/02

(54) **EYEWEAR**

(71) Applicant: ESSILOR INTERNATIONAL, 94220 Charenton-Le-Pont (FR)
(72) Inventor: SPIEGEL, Daniel, 39346 Singapore (SG); GIRAUDET, Guillaume, 94220 CHARENTON LE PONT (FR); DROBE, Bjorn, 39346 Singapore (SG); YANG, Huixian Adeline, 39346 Singapore (SG); BARANTON, Konogan, 94220 CHARENTON LE PONT (FR); GUILLOT, Matthieu, 94220 CHARENTON LE PONT (FR)
(74) Representative: Jacobacci Coralis Harle

(57) **Abstract**

An aspect of the disclosure relates to an eyewear for a user seeing an image when wearing the eyewear. The eyewear may include a light adjusting means configured to provide a projection light which is perceived by a user's eye when facing a first surface of the light adjusting means, such that the user may see a modified image which is modified from an original image. The light adjusting means may be configured to provide a modified amount of positive contrast signal, for a retina of an eye of the user, in the modified image as compared to the original image.

## Description

### TECHNICAL FIELD

Various aspects of this disclosure relate to an eyewear for a user seeing an image when wearing the eyewear.

### BACKGROUND

Myopia, a form of ametropia, is a condition of the human eye where the light that comes in does not directly focus on the retina but in front of it, causing an image that one sees to be out of focus when looking at a distant object, but in focus when looking at a close object. While low myopia is merely disturbing (e.g. > -5D), high myopia is associated with increasing risks of severe vision defects and in extreme cases, blindness. Thus, myopia control has become a serious burden both in the clinical and research domains of eye care.

Currently, myopia may be compensated using optical lenses that refocuses the image. The optical lenses may be implemented in an eyewear which is worn by a user. However, such optical lenses neither correct nor solve the underlying issue, and in particular, does not solve the issue of myopia control or progression for the user. Such optical lenses provide only a compensatory means and the user is therefore dependent on such lenses for vision correction. Consequently, the user needs to wear such corrective optical lenses for his or her whole life.

Thus, there is a need to provide for an improved eyewear, which does not require lifelong use.

### SUMMARY

It is an object of the disclosure to provide an eyewear which modifies an original image into a modified image thereby providing a modified (e.g., increased) amount of positive contrast signal, for a retina of an eye of a user. It is also an object of the disclosure to provide an image processing circuit including instructions to carry out an image processing method to provide the modified image. It is further an object to provide an image processing device including image processing circuitry configured to carry out the image processing method to provide the modified image.

A first aspect of the disclosure relates to an eyewear for a user seeing the image when wearing the eyewear. The eyewear may include a light adjusting means, which may be configured to provide a projection light which is perceived by the user's eye when facing a first surface of the light adjusting means, such that the user sees a modified image which is modified from an original image. The light adjusting means may be configured to provide a modified (e.g., increased) amount of positive contrast signal for a retina of an eye of the user in the modified image as compared to the original image.

According to various embodiments, the modified (e.g., increased) amount of positive contrast signal may be provided by a light intensity pattern adjustment. According to various embodiments, the light intensity pattern adjustment may include a transmission pattern and/or a light emission pattern. The transmission pattern and/or the light emission pattern may be provided on at least one lens of the eyewear. According to various embodiments, the light intensity pattern adjustment may be produced by both the transmission pattern and the light emission pattern.

According to various embodiments, the transmission pattern may include a plurality of minority regions of higher transmission than a remaining majority region.

According to various embodiments, the plurality of minority regions may be formed as through holes in the lens.

According to various embodiments, the plurality of minority regions differs from the majority region by coating.

According to various embodiments, the transmission pattern may be rotational and translational symmetry free.

According to various embodiments, the modified (e.g., increased) amount of positive contrast signal may be provided by the light intensity pattern adjustment, produced by a light emission pattern.

According to various embodiments, the light adjusting means may include a light source including one or a plurality of light emitters arranged on the eyewear for generating the light emission pattern.

According to various embodiments, the light adjusting means may include a plurality of light reflectors for generating the light emission pattern by reflecting the light from said one or plurality of the light emitters.

According to various embodiments, the plurality of light reflectors may be selected from prism, mirror and liquid crystal.

According to various embodiments, the light emission pattern may be rotational and translational symmetry free.

According to various embodiments, the eyewear may include an image projector to generate the light emission pattern.

According to various embodiments, the eyewear may further include an image sensor and an image processing circuit.

According to various embodiments, the image processing circuit may be configured to map a plurality of positive contrast regions of the original image. Each of the plurality of positive contrast regions may have a contrast of a center to its surroundings exceeding a pre-determined positive contrast threshold.

According to various embodiments, the image processing circuit may be configured to map a plurality of negative contrast regions of the original image. Each of the plurality of negative contrast regions may have a contrast of surroundings to their center exceeding a pre-determined negative contrast threshold.

According to various embodiments, the image processing circuit may be configured to map a plurality of negative contrast regions of the original image. Each of the plurality of negative contrast regions may have a contrast of surroundings to their center exceeding a pre-determined negative contrast threshold. The image processing circuit may be further configured to calculate the modified image by modifying the image on the plurality of positive contrast regions or on the plurality of negative contrast regions, to obtain a global difference of a first global ratio to a second global ratio. The first global ratio (GR1) may be defined as a difference between a sum of contrast of the plurality of positive contrast regions and a sum of contrast of the plurality of negative contrast regions of the original image. The second global ratio (GR2) may defined as a difference between a sum of contrast of the plurality of positive contrast regions and a sum of contrast of the plurality of negative contrast regions of the modified image.

According to various embodiments, the image processing circuit may be configured to calculate adjustment parameters based on the global difference of the first global ratio to the second global ratio.

According to various embodiments, the modified image may correspond to the original image having reversed contrast.

Another aspect of the disclosure relates to an image processing device. Another aspect of the disclosure relates to an image processing method. Another aspect of the disclosure relates to an image processing method.

An aspect of the disclosure relates to an image processing device. The image processing device may include an imaging processing circuitry, which may be configured to receive an image in an electronic format. The image processing circuit may be further configured to map a plurality of positive contrast regions of an image, each of the plurality of positive contrast regions having a contrast of a center to its surroundings exceeding a pre-determined positive contrast threshold. The image processing circuit may be further configured to map a plurality of negative contrast regions of an image, each of the plurality of negative contrast regions having a contrast of surroundings to their center exceeding a pre-determined negative contrast threshold. The image processing circuit may be further configured to calculate a modified image by modifying the image on the plurality of positive contrast regions or on the plurality of the negative contrast regions, to obtain a global difference of a first global ratio to a second global ratio. The first global ratio may be defined as a difference between a sum of contrast of the plurality of positive contrast regions and a sum of contrast of the plurality of negative contrast regions of the image. The second global ratio may be defined as a difference between a sum of contrast of the plurality of positive contrast regions and a sum of contrast of the plurality of negative contrast regions of the modified image.

According to various embodiments the image processing device may be a server which receives the image via internet from a user device and sends the modified image via internet to the user device.

According to various embodiments the imaging processing circuitry may be configured to process a plurality of frames of a videostream, each frame of the plurality of frames corresponding to the image to be processed.

According to various embodiments the image processing circuitry may be further configured to calculate the global difference of the first global ratio to the second global ratio of a plurality of images received over time, and further configured to trigger an image modification when a resultant based on the integral of the global difference of the first global ratio to the second global ratio over a time window exceeds a duration threshold.

According to various embodiments the image modification may be a modification of pixels of the plurality of positive or negative contrast regions calculated to minimize the resultant.

According to various embodiments the image modification may be a contrast reversal including changing one of the plurality of negative contrast regions into positive contrast or changing one of the plurality of positive contrast regions into negative contrast.

According to various embodiments calculating the modified image may include blurring one of the plurality of positive contrast regions or one of the plurality of negative contrast regions.

According to various embodiments calculating the modified image may include modifying a light intensity of the center of one or more of the plurality of positive contrast regions or of the plurality of negative contrast regions.

According to various embodiments calculating the modified image may include modifying a light intensity of surroundings of one or more of the plurality of positive contrast regions or of the plurality of negative contrast regions.

An aspect of the disclosure relates to an image processing method. The method may include mapping a plurality of positive contrast regions of an image, each of the plurality of positive contrast regions having a contrast of a center to its surroundings exceeding a pre-determined positive contrast threshold. The method may include mapping a plurality of negative contrast regions of an image, each of the plurality of negative contrast regions having a contrast of surroundings to their center exceeding a pre-determined negative contrast threshold. The method may include calculating a modified image by modifying the image on the plurality of positive contrast regions or on the of the negative contrast regions, to obtain a global difference of a first global ratio to a second global ratio. The first global ratio may be defined as a difference between a sum of contrast of the plurality of positive contrast regions and a sum of contrast of the plurality of negative contrast regions of the image. The second global ratio may be defined as a difference between a sum of contrast of the plurality of positive contrast regions and a sum of contrast of the plurality of negative contrast regions of the modified image.

According to various embodiments calculating the modified image may include blurring one of the plurality of positive contrast regions or one of the plurality of negative contrast regions.

According to various embodiments calculating the modified image may include modifying a light intensity of the center of one or more of the plurality of positive contrast regions or of the plurality of negative contrast regions.

According to various embodiments calculating the modified image may include modifying a light intensity of surroundings of one or more of the plurality of positive contrast regions or of the plurality of negative contrast regions.

According to various embodiments modifying the light intensity of the center or of the surroundings, respectively, may include changing one of the plurality of negative contrast regions into positive contrast or changing one of the plurality of positive contrast regions into negative contrast.

### BRIEF DESCRIPTION OF THE DRAWINGS

The disclosure will be better understood with reference to the detailed description when considered in conjunction with the non-limiting examples and the accompanying drawings, in which:
- FIGS. 1A and 1B show schematic illustrations of a use condition of the eyewear 100, by way of example, and in accordance with various embodiments;
- FIGS. 2A to 2D show exemplary images which stimulate the ON- and OFF- pathways of the visual system, and in accordance with various embodiments;
- FIG. 3 shows a schematic illustration of the front view of a transmission pattern 300, by way of example, and in accordance with various embodiments;
- FIG. 4 shows a schematic illustration of the front view of a light emission pattern 400, by way of example, and in accordance with various embodiments;
- FIGS. 5A to 5C show exemplary schematic illustrations of the various arrangements of the light source including one or the plurality of light emitters 410, and the plurality of light reflectors 420 on the eyewear 100, which may generate the light emission pattern 400, and in accordance with various embodiments;
- FIG. 6 shows a schematic illustration of an example of an optical system 600, including the eyewear 100, an image sensor 610, an image processing circuit 620, and an image projector 630, and in accordance with various embodiments;
- FIG. 7 illustrates an algorithm of modifying an image 700, by way of example, and in accordance with various embodiments;
- FIGS. 8A and 8B shows schematic illustration of an adjustment parameter which may be used to obtain the modified image, by way of example, and in accordance with various embodiments;
- FIG. 9A to 9C shows schematic illustration of an adjustment parameter which may be used to obtain the modified image, by way of example, and in accordance with various embodiments;
- FIG. 10 shows a graph 1000 which provides an example of the determination of the ON/OFF ratio for use with the eyewear 100, and in accordance with various embodiments; and
- FIG. 11 shows a graph 1100 which provides an example of the periodic contrast reversal for use with the eyewear 100, in accordance with various embodiments.

### DETAILED DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

The disclosure illustratively described herein may suitably be practiced in the absence of any element or elements, limitation or limitations, not specifically disclosed herein. Thus, for example, the terms "comprising", "including," containing", etc. shall be read expansively and without limitation. The word "comprise" or variations such as "comprises" or "comprising" will accordingly be understood to imply the inclusion of a stated integer or groups of integers but not the exclusion of any other integer or group of integers. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the disclosure. Thus, it should be understood that although the present disclosure has been specifically disclosed by exemplary embodiments and optional features, modification and variation of the disclosure embodied herein may be resorted to by those skilled in the art.

In the context of various embodiments, the articles "a", "an" and "the" as used with regard to a feature or element include a reference to one or more of the features or elements. As used herein, the term "and/or" includes any and all combinations of one or more of the associated listed items.

The reference signs included in parenthesis in the claims are for ease of understanding of the disclosure and have no limiting effect on the scope of the claims.

According to various embodiments, the term "eyewear", as used herein, may refer to an optical article configured to be worn by a user on/in relation to the eye, for example, in front of a user's eye. For example, the eyewear may be selected from the group of: spectacle, sunglass, head mounted device, augmented reality device, virtual reality device. According to various embodiments, the eyewear may be electronically active (i.e. electronically powered), or may be electronically passive (e.g., not electronically powered, or electronic component free).

According to various embodiments, the term "lens" ("lenses") may have corrective power (e.g., a multifocal lens, a prescription lens for ametropic conditions) or may not have corrective power (e.g., a plano lens). According to various embodiments, the lens(es) may be clear, tinted (e.g. grey tint, pink tint, blue tint, brown tint etc.), or may be polarized.

It is understood that any reference herein to a "frame" is to a portion of the eyewear which is a non-lens portion, for example an eyeglass as in an eyewear may include a frame and may include lenses attached to the frame, if not otherwise explicitly indicated, the lenses are not part of the frame.

According to various embodiments, the term "original image", as used herein, may refer to a present or existing image that the user may see when looking. For example, an original image may refer to the present or existing image the user sees when the user is not wearing the eyewear described in accordance with various embodiments of this disclosure, or when the user is wearing a comparative eyewear free of the light adjusting means.

According to various embodiments, the term "modified image", as used herein, may refer to an altered original image that the user sees when the user is wearing the eyewear described in accordance with various embodiments of this disclosure. A modified image may correspond to the original image, and thus retain majority of the information of the original image. In other words, the original image may be altered or modified in a manner that the user is still able to recognize or decipher the content of the original image. For example, the modified image may correspond to the original image with selected properties (e.g. contrast, luminescence) that may be altered.

According to various embodiments, the term "light adjusting means", as used herein, may refer to a tool, article or object that is used to alter the original image, such that the user's eye sees the modified image. For an eyewear, the term "light adjusting means" may include the meaning of a structural property of the eyewear and/or a device included in the eyewear. For example, the light adjusting means may include a lens configured to alter the image. As a further example, the design may be configured to alter the contrast of the original image to provide the modified image. In accordance with various embodiments, the light adjusting means may include a light intensity pattern which may provide the design used to adjust or alter the contrast of the original image, thus providing the modified image.

According to various embodiments, the term "light intensity pattern", as used herein, may refer to an arrangement of a plurality of elements included in the light adjusting means. For example, the arrangement of the plurality of elements may be rotational and translational symmetry free. As a further example, the elements may repeat in a random manner (e.g. randomized). According to some embodiments, the plurality of elements may be formed in or on a lens, e.g., deposited on a lens. The pattern provided on the light intensity pattern may adjust or alter the light intensity, luminance, or contrast emitted from an image. For example, the light intensity pattern may increase or decrease the luminance of an incident ray.

According to various embodiments, the term "projection light", as used herein, may refer to light which is projected from the light adjusting means. The projection light may refer to light which contains visual information so that, when perceived by the user, (e.g. solely or in addition with the original image) the user perceives the modified image. The light adjusting means is configured to provide the projection light.

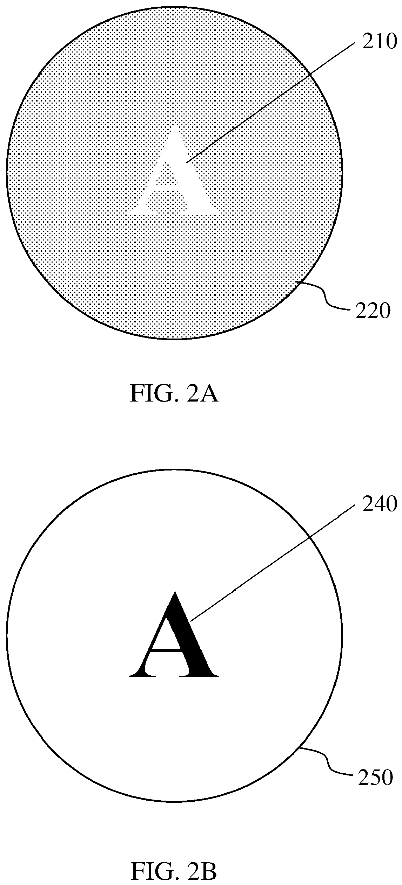

According to various embodiments, the term "positive contrast signal" (in the singular or plural), as used herein, may refer to visual signals that may stimulate the ON-pathway of the visual system, when viewed by a viewer. The positive contrast signal(s) may be provided by image portion(s) of respective positive contrast region(s). The ON-pathway may be stimulated by a positive contrast signal which may correspond to the presence of a light stimulus on a dark background, as will be explained with reference to FIG. 2A below. In other words, when the user's eye sees the positive contrast signal, the ON-pathway of the user's visual system may be activated. As a further example, the positive contrast signal may be provided by altering (e.g. decreasing) the spatial frequency of the image.

According to various embodiments, the term "negative contrast signal" (in singular or plural), as used herein, may refer to visual signals that may stimulate the OFF-pathway of the visual system, when viewed by a viewer. The negative contrast signal(s) may be provided by image portion(s) of respective negative contrast region(s). The OFF-pathway may be stimulated by a negative contrast signal which may correspond to the presence of a dark stimulus on a light background, as will be explained with reference to FIG. 2B below. In other words, when the user's eye sees the negative contrast signal, the OFF-pathway of the user's visual system may be activated. As a further example, the negative contrast signal may be provided by altering (e.g. increasing) the spatial frequency of the image.

According to various embodiments, the term "sum of contrast of the plurality of positive contrast regions", as used herein, may refer to an aggregation of image portion(s) of the positive contrast regions and may be denoted as ∑PCR*_{orig}*. The sum of contrast of the plurality of positive contrast regions ∑PCR*_{orig}* may stimulate the ON-pathway of the visual system, when viewed by a viewer. For example, the sum of contrast of the plurality of positive contrast regions ∑PCR*_{orig}* may refer to the aggregation of image portion(s) of light stimulus on a dark background (e.g. image portion of FIG. 2A). As a further example, the sum of contrast of the plurality of positive contrast regions ∑PCR*_{orig}* may refer to the aggregation of image portion(s) of low spatial frequency.

According to various embodiments, the term "sum of contrast of the plurality of negative contrast regions", as used herein, may refer to an aggregation of image portion(s) of the negative contrast regions and may be denoted as ∑NCR*_{orig}*. The sum of contrast of the plurality of negative contrast regions ∑NCR*_{orig}* may stimulate the OFF-pathway of the visual system, when viewed by a viewer. For example, the sum of contrast of the plurality of negative contrast regions ∑NCR*_{orig}* may refer to the aggregation of image portion(s) of dark stimulus on a light background (e.g. image portion of FIG. 2B). As a further example, the sum of contrast of the plurality of negative contrast regions ∑NCR*_{orig}* may refer to the aggregation of image portion(s) of high spatial frequency.

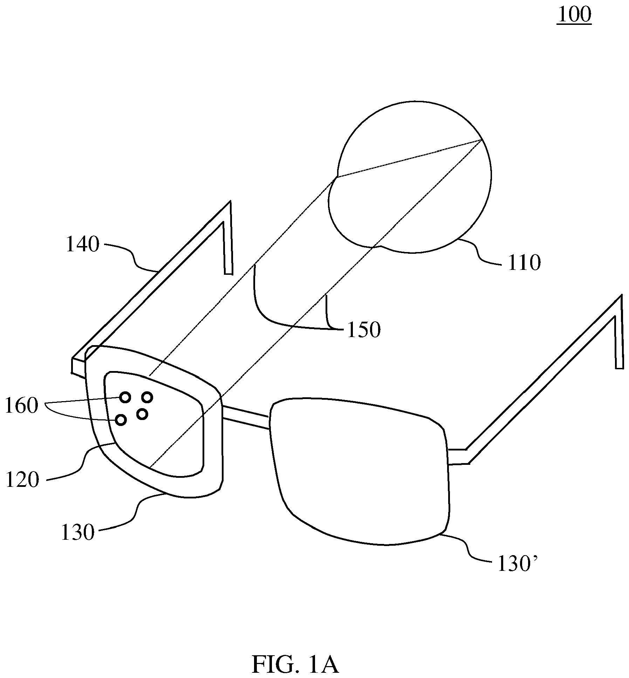

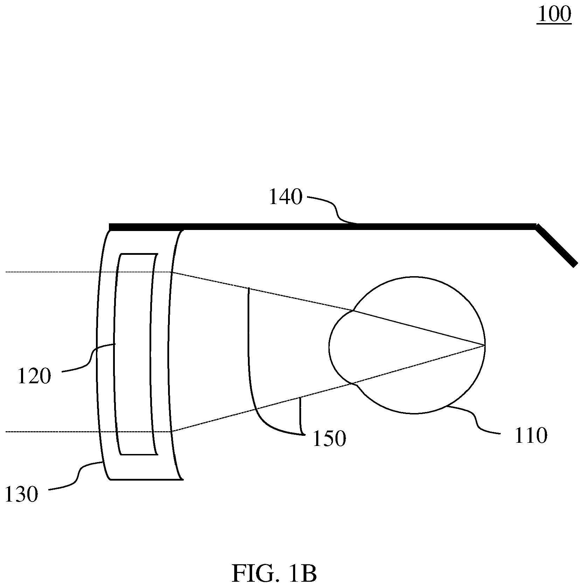

FIGS. 1A and 1B show schematic illustrations of a use condition of an eyewear 100, by way of example. FIG. 1A shows the schematic illustration of the perspective view, and FIG. 1B shows the schematic illustration of a partial top cross-sectional view of such use. The exemplary use condition as shown in FIGS. 1A and 1B may include an eyewear 100 and a user's eye 110. The eyewear 100 may be in front of the user's eye 110 such that the user's eye 110 receives visual signals when the user is wearing the eyewear 100. For example, the user's eye 110 may see the modified image. The eyewear 100 may include at least one lens 130 mounted on a frame 140. The at least one lens 130 may include a light adjusting means 120. The at least one lens may further include lens 130' or, alternatively, lens 130' may be configured different than lens 130 or may be light adjusting means free. For example, the light adjusting means 120 may be placed on at least one lens 130, or on the two or more lenses 130, 130'. The light adjusting means 120 may partially or fully alter the original image to produce the modified image, and the projection light 150 may include visual signals on the modified image. For example, the projection light 150 may include visual signals on the modified image, which may correspond to the original image having a modified positive contrast, e.g. increased number of areas of positive contrast, and/or modified contrast on the positive contrast areas. Alternatively, the projection light 150 may include visual signals on the modified image, which may correspond to the original image having a modified contrast on the negative contrast areas.

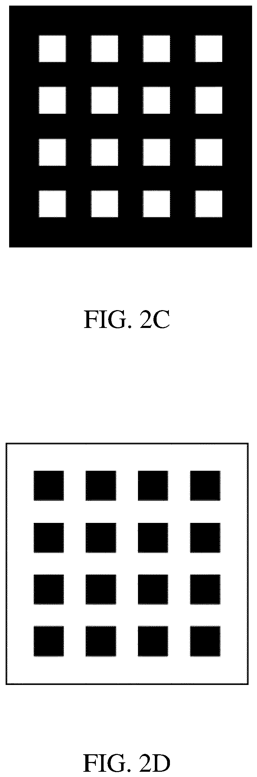

Exemplary images which stimulate the ON- and OFF- pathways of the visual system are shown in FIGS. 2A to 2D. Referring to FIG. 2A, the ON-pathway may be stimulated by the presence of a light stimulus 210 (e.g. white text 'A') on a background 220, which may be for example, a black background (the black background is represented by dotted pattern filling, and is provided solely for illustration purposes). The white text 'A' 210 on the background 220 surrounding 'A' has a positive contrast, which may stimulate the ON-pathway. Conversely, as shown in FIG. 2B, the black text 'A' 240 on a white background 250 surrounding 'A' has a negative contrast, which may stimulate the OFF-pathway. For example, classical black-on-white text may stimulate the OFF-pathway. An outline of the light background and of the text 'A' is provide in FIGS. 2A and 2B solely for illustration purposes. According to various embodiments, the ON- and OFF-pathways of the visual system may also be stimulated by spatial frequency, which describes the periodic distributions of light and dark in an image. As shown in FIG. 2C, the distributions of bright (e.g. light) areas on a dark surrounding area may stimulate the ON-pathway. The ON-pathway also mediates lower spatial frequencies (e.g. FIG. 2C) which codes coarse levels of details, for example, the global shape (e.g. general orientation and proportion) of the image. On the other hand, as shown in FIG. 2D, the distributions of dark areas on a bright (e.g. light) surrounding area may stimulate the OFF-pathway. The OFF-pathway also mediates higher spatial frequencies (e.g. FIG. 2D) which codes fine levels of detail, for example, sharp edges of the image.

Referring to FIGS. 1A to 2D, the light adjusting means 120 may include a light intensity pattern 160 arranged on the light adjusting means 120. The light intensity pattern 160 may be configured to adjust the contrast signal for the retina of the user's eye 110, in the modified image as compared to the original image. For example, the light intensity pattern 160 may provide a modified (e.g. increased) amount of positive contrast signal. The light intensity pattern 160 may, for instance, blur (e.g. lower high spatial frequency content), or may adjust the contrast of the image or image portion(s). In other words, the retina of the user's eye 110 may see the modified image which may be adjusted to stimulate the ON-pathway of the visual system. For example, the modified image may include image portion(s) of positive contrast region(s), for instance, by modifying negative contrast region(s) to positive contrast region(s). As a further example, the modified image may include image portion(s) which may be blurred (e.g. lower high spatial frequency content).

It has been established that the visual environment, or stimuli which preferentially stimulates the OFF- and ON-pathways of the human eye have differential effects on eye physiology and ametropia. Stimulation of the OFF-pathway in the visual system has been associated with choroidal thinness, eye elongation and the myopization process. On the other hand, stimulation of the ON-pathway in the visual system has been associated with choroidal thickness and emmetropia. In particular, stimulation of the ON-pathway has been associated with reduced myopic shift, and suppressed progression of abnormal refractions caused by myopia in human eyes. It has therefore been hypothesized that modulation of the mutual strength of the OFF- and ON-pathways has an effect on myopia onset and progression.

Advantageously, the eyewear 100 according to various embodiments of the disclosure may provide the means to modulate of the mutual strength of the OFF- and ON-pathways of the user's visual system. The eyewear 100 may adjust the contrast of the original image to reduce the strength of the OFF-pathway. The eyewear 100 may also adjust the contrast of the original image to increase the strength (e.g. stimulate) the ON-pathway. Thus, the eyewear 100 may prevent the onset of myopia for an emmetropic user, or may slow the effect of myopia progression for a myopic user.

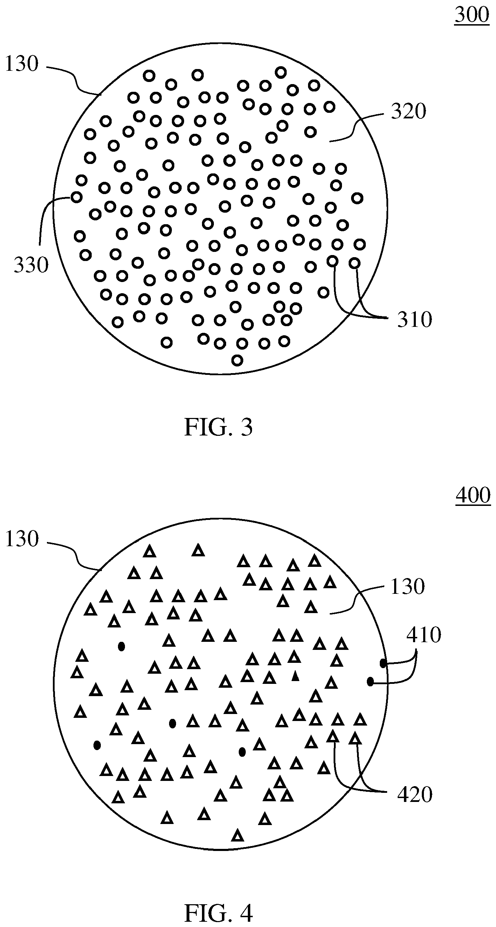

The various mechanisms that the eyewear 100 may employ to stimulate the ON-pathway of the user's visual system will be explained below, with reference to FIGS. 3 to 11.

FIG. 3 shows a schematic illustration of the front view of a transmission pattern 300, by way of example. According to various embodiments, the light intensity pattern 160 may be provided by the transmission pattern 300. For example, the adjustment of contrast may be provided by the light intensity pattern 160, produced by the transmission pattern 300. The transmission pattern 300 may be provided on at least one lens 130 of the eyewear 100. For example, the transmission pattern 300 may be provided on one lens 130, or on two or more lenses, 130, 130'. The transmission pattern 300 may include an arrangement of the plurality of elements. For example, each element may include a region of the surface of the lens(es) 130, 130' having different refractive indices. As a further example, each element may be an aperture on the surface of the lens(es) 130, 130'. The transmission pattern 300 may include a plurality of minority regions 310. The remaining regions which do not contain the plurality of minority regions 310 may be referred to as a remaining majority region 320. For example, the remaining majority region 320 may include the remaining surface of the lens 130, 130' of the eyewear 100 that is not occupied by the elements of the plurality of elements. According to various embodiments, the plurality of minority regions 310 may include a pattern, for example, a pattern of apertures. The pattern of apertures may include a plurality of individual apertures 330.

According to various embodiments, each aperture 330 may include various geometric shapes. Non-limiting exemplary plan views of such shapes include: circles, ovals, squares, rectangles, pentagons, or hexagons. For example, the plurality of minority regions 310 may include one geometric shape or may include more than one geometric shape. As a further example, the plurality of minority regions 310 may include circular apertures 330, or may include a mixture of circular, oval, and hexagonal apertures 330. Circles have been provided in the example of FIG. 3 solely for illustration purposes.

According to various embodiments, the size of each aperture 330 may range from 0.1 mm to 5 mm in width. For example, the size of each aperture 330 may range from 0.1 mm to 3 mm in width, or may range from 0.2 mm to 2 mm in width. The plurality of minority regions 310 may include apertures 330 of one size, or may include apertures 330 of various sizes. For example, the plurality of minority regions 310 may include apertures 330 of 1 mm in width, or may include apertures 330 of 1 mm and 2 mm in width. The width may be a maximum width.

According to various embodiments, the spacing between individual apertures 330 may range from 0 mm (e.g. joint) to 10 mm (e.g. separate). For example, the spacing between each aperture 330 may range from 0 mm to 5 mm, or may range from 0 mm to 3 mm. The plurality of minority regions 310 may include apertures 330 which are spaced apart, or a mixture of joint and spaced apertures 330. For example, the plurality of minority regions 310 may include apertures 330 spaced 2 mm apart, or may include joints apertures 330 and apertures 330 spaced 2 mm apart.

Advantageously, the plurality of minority regions 310 may provide regions of higher light transmission, as compared to the remaining majority region 320. For example, the plurality of minority regions 310 may transmit approximately 99 % or more of incident light intensity, while the remaining majority region 320 (e.g. lens 130, 130') may transmit approximately 96 % or more of light. The plurality of minority region 310 may provide small areas of higher luminescence, when compared to the remaining majority region 320. The transmission pattern 300 may provide a modified (e.g. increased) amount of positive contrast signal for the retina of an eye of the user 110. For example, the transmission pattern may increase the sum of contrast of the positive contrast region(s). As a further example, the transmission pattern 300 may blur (e.g. lower high spatial frequency content) of image portion(s). Thus, the transmission pattern 300 may stimulate the ON-pathway of the visual system.

According to various embodiments, the plurality of minority regions 310 may be formed by through holes, at regions where individual apertures 330 may be formed. The remaining majority region 320 may not include through holes. In addition to the various geometric shapes as described above for each aperture 330, apertures 330 formed using through holes may further include cones. For example, the plurality of minority regions 310 may include conic through holes, or may include conic and circular through holes. A mask may be provided to facilitate the formation of the apertures 330.

According to various embodiments, the term "through hole", as used herein, may include the meaning of a physical hole or opening in the lens(es) 130, 130'. For example, a through hole may refer to a physical space or gap that allows incident light to pass through. Molding or drilling are some non-limiting examples of how the through holes may be formed. A mask may be provided to facilitate the formation of the through holes.

According to various embodiments, apertures 330 formed by through holes may be oriented towards the eye rotation center (ERC). For example, each aperture 330 may be positioned such that the plurality of minority regions 310 as a whole, may be aligned towards the ERC. Such an orientation may provide additional power near the user's central vision (e.g. within the fovea).

According to various embodiments, apertures 330 formed by through holes may not be oriented towards the ERC. For example, individual apertures 330 may be randomly or non-uniformly arranged on the lens 130. Since the through holes may not be oriented towards the ERC, additional power near the user's central vision (e.g. within the fovea), and peripheral vision (e.g. outside the fovea) may be provided. Thus, the variations in the orientation of the apertures 330 formed by through holes to the ERC may create a myopic defocus in front of the retina of the user's eye 110. Further, the random alternance of the apertures 330 formed by through holes in the lens 130 may also randomize the transmission of light, for example, by randomizing the path of a light ray.

According to various embodiments, the walls of the apertures 330 formed by through holes may include a coating. For example, the circumference of the apertures 330 may or may not be coated. By way of example, the walls of the apertures 330 may be coated with a mirror to create a light guide, which may modify (e.g. increase) the amount of light on the retina of the user's eye 110. As a further example, the walls of the apertures 330 may be coated with a nonreflective coating (e.g. AR coating), which may allow a higher transmission of light through the plurality of minority regions 310 as compared to the remaining majority region 320.

According to various embodiments, the lens(es) 130, 130' including the plurality of minority regions 310 formed by through holes may be coated with a protective coating on at least one surface of the lens(es) 130, 130'. For example, one or both surfaces of the lens(es) 130, 130' may be coated with the protective coating. Non-limiting examples of protective coatings may include transparent film(s) or additional lens(es). Accordingly, dust from the environment may not enter the plurality of minority region 310.

Advantageously, the transmission pattern 300 including the plurality of minority regions 310 formed by through holes may provide a higher transmission of light, as compared to the remaining majority region 320 (e.g. lens(es) 130, 130'), and may modify (e.g. increase) the amount of positive contrast signal for the retina of an eye of the user 110 to stimulate the ON-pathway of the visual system. In addition, the plurality of minority regions 310 may provide the additional benefit of myopic control for the user. As the through holes do not have corrective power, light passing through the transmission pattern 300 may create a myopic defocus, for example, by reducing the hyperopic defocus and/or creating a peripheral defocus, in front of the retina of the user's eye 110, which may serve as a supplementary signal to prevent eye elongation and hence myopia progression.

According to various embodiments, the plurality of minority regions 310 may be formed by a coating. The plurality of minority regions 310 may be formed by depositing the coating on regions where individual apertures 330 may be formed, or alternatively, on the remaining majority region 320. For example, AR coatings may be deposited on the surface of the lens(es) 130, 130' to form individual apertures 330. As an alternative example, absorptive coatings may be deposited on the surface of the lens(es) 130, 130' at regions where the remaining majority region 320 may be formed. According to various embodiments, both the plurality of minority regions 310 and the remaining majority region 320 may be formed by coatings. For example, a first coating may be deposited to form the plurality of minority regions 310, and a second coating may be deposited to form the remaining majority region 320.

According to various embodiments, the term "coating", as used herein, may include the meaning of depositing a material so as to form a layer (e.g., a material from solution, or from a gas or vapor phase, to form a layer on the lens(es) 130, 130'), and may include the meaning of laminating a pre-formed layer (e.g. as in an adhesive fixing of an anti-reflective (AR) coating, formed on a temporary substrate, on the lens 130). A few, non-limiting, examples of depositing a material so as to form the layer are: thin film coating, spin coating, sputtering, inkjet printing, physical vacuum deposition. A mask may be provided to facilitate the deposition of the coating.

According to various embodiments, the transmission pattern 300 may be rotational and translational symmetry free. For example, two or more apertures 330 may be arranged in a uniform manner to form a pattern set, and each pattern set may be repeated in a non-uniform manner on the lens(es) 130, 130'. For instance, a first pattern set may be spaced 1 mm apart from a second pattern set. A third pattern set may be spaced narrower or further (e.g. ±10% variation, 0.9 mm or 1.1 mm) from the second pattern set. As such, the plurality of minority regions 310 may include a plurality of the uniform patterns arranged in a non-uniform manner on the lens(es) 130, 130'. Alternatively, each aperture 330 may be randomly (e.g. non-regular) arranged. For example, the apertures 330 on the lens(es) 130, 130' may not be aligned. Since the transmission pattern 300 may be rotational and translational symmetry free, the diffraction of light may be avoided. Hence, the transmission pattern 300 may not disrupt or distort the original image but merely adjust the contrast of the original image, allowing the user to easily recognize and decipher the content of the modified image.

Advantageously, the transmission pattern 300 may provide means to stimulate the ON-pathway of the user's visual system by providing a pattern which induces contrast polarity. Within the context of the disclosure, the transmission pattern 300 may modify the ratio of the OFF- and ON-pathway stimulus. For example, the transmission pattern 300 may reduce the OFF-pathway stimuli, and increase the ON-pathway stimuli. For instance, the transmission pattern 300 may provide the modified image, which may correspond to the original image having reversed contrast. As a further example, the transmission pattern 300 may provide the modified image, which may include image portion(s) which may be blurred (e.g. lower high spatial frequency content).

FIG. 4 shows a schematic illustration of the front view of a light emission pattern 400, by way of example. According to various embodiments, the light intensity pattern 160 may be provided by the light emission pattern 400, to provide a modified (e.g. increased) amount of positive contrast signal to stimulate the ON-pathway. The light emission pattern 400 may be provided on at least one lens 130 of the eyewear. For example, the light emission pattern 400 may be provided on one lens 130, or on both lenses 130, 130'. The light emission pattern 400 may include a light source, and may further include a plurality of light reflectors 420. The light source may include one or a plurality of light emitters 410. For example, the light emission pattern 400 may include a light source including one light emitter 410 and may include two or more light reflectors 420. As a further example, the light emission pattern 400 may include an equal number of light emitters 410 and light reflectors 420.

According to various embodiments, the light source including one or a plurality of light emitters 410 may be configured to provide a small spot on the retina of the user's eye 110. The light source including one or a plurality of light emitters 410 may include light-emitting diodes (LED, e.g. miniature LED), and/or lasers. For example, the LED(s) and lasers may be of different frequencies within the visible spectrum (e.g. red, green, white). As a further example, the intensity of the light source including one or a plurality of light emitters 410 may be configured to accommodate the differing intensities of the surrounding environmental (e.g. ambient) light. According to various embodiments, the light source including one or a plurality of light emitters 410 may further include fluorescent dots or diffusing dots. For example, the fluorescent dots or diffusing dots may be lit by environmental light, LED(s) and/or lasers.

According to various embodiments, the light source including one or a plurality of light emitters 410 may be arranged on the eyewear 100 and may generate the light emission pattern 400. The light source including one or a plurality of light emitters 410 may be directly inlaid (e.g. embedded) in the lens(es) 130, 130'. Alternatively, the light source including one or a plurality of light emitters 410 may be arranged on the eyewear 100 close to the user's nose, or close to the light adjusting means 120. For example, the one or a plurality of light emitters 410 may be arranged on the frame 140, or on the bridge or nose pad arms of the eyewear 100.

According to various embodiments, the plurality of light reflectors 420 may be provided to reflect light from the light source including one or a plurality of light emitters 410 to generate the light emission pattern 400. The plurality of light reflectors 420 may include objects which do not create light but may instead reflect light (e.g. smooth shiny surfaces). The plurality of light reflectors 420 may be configured to reflect light towards the pupil of the user's eye, and may provide a small lighted spot on the retina of the user's eye 110. The reflectivity of the plurality of light reflectors 420 may be configured depending on the power of the light source including one or the plurality of light emitters 410. For example, the reflectivity of the light reflectors 420 may be reduced, when used in conjunction with a high-powered light source including one or a plurality of light emitters 410.

According to various embodiments, the plurality of light reflectors 420 may include prisms (e.g. microprisms), liquid crystals, mirrors (e.g. micromirrors) and may further include lenses (e.g. microlenses). The plurality of light reflectors 420 may be selected from one type of light reflector 420, or may include a combination of the various types of light reflectors 420. For example, the plurality of light reflectors 420 may include prisms, or may include a combination of prisms and mirrors.

According to various embodiments, the size of the plurality of light reflectors 420 may range from 0.1 mm to 5 mm. For example, the size of the plurality of light reflectors 420 may range from 0.1 mm to 2 mm, or may range from 0.1 mm to 1 mm. The indicated sizes of the light reflectors 420 may minimize distortion of the original image while providing sufficient light to stimulate the ON-pathway of the user's visual system, allowing the user to easily recognize and decipher the content of the modified image.

According to various embodiments, the plurality of light reflectors 420 may be configured with a narrow reflective spectral band centered on the wavelength of the light source including one or the plurality of light emitters 410. For example, for a light source including one or the plurality of light emitters 410 with a wavelength of 450 nm (e.g. blue light), the plurality of light reflectors 420 may be configured such that the reflective spectral band is centered on the wavelength of blue light (e.g. 450 nm ± 20 nm, ranging from 430 nm to 470 nm). By tailoring the spectral band of the light reflectors 420, the impact on the lens(es) 130, 130' transparency may be minimized.

According to various embodiments, the plurality of light reflectors 420 may be designed to reflect pre-determined specified wavelengths of light. For example, the plurality of light reflectors 420 may reflect light at a wavelength of 550 nm ± 10 nm (e.g. yellow light), and may not reflect light at other wavelengths (e.g. 700 nm ± 10 nm, red light or 400 nm ± 10 nm, violet light). In accordance with various embodiments, each lens 130, 130' may include light reflectors 420 which reflect light at a specified wavelength, or may further include light reflectors 420 which reflect light at various specified wavelength. For example, each lens 130, 130' may include light reflectors 420 configured to reflect light at 550 nm ± 10 nm (e.g. yellow light), or a mixture of light reflectors 420 which reflect light at 550 nm ± 10 nm and at 700 nm ± 10 nm (e.g. yellow and red light). Accordingly, distortion of the original image may be minimized, while sufficient light may be provided to induce contrast polarity and stimulate the ON-pathway of the user's visual system.

According to various embodiments, the plurality of light reflectors 420 may be coated with an interferential layer, for example, a multilayered interferential layer. The interferential layer may prevent or reduce constructive or destructive interference of each reflected ray from the plurality of light reflectors 420, and may therefore increase the ratio of reflected light provided to the retina of user's eye 110.

According to various embodiments, the plurality of light reflectors 420 may further include spherical power (e.g. -10 D), which may provide myopic correction. Light from the light source including the one or plurality of light emitters 410 may be imaged at varying distances, when compared to the distance between the retina of the user's eye 110 and the lens(es) 130, 130'. A small spot may thus be projected onto the retina of the user's eye 110. For example, the plurality of light reflectors 420 for a myopic user may be configured to be imaged 30 cm from the retina of the user's eye 110. In other words, the plurality of light reflectors 420 may adjust the focus for a myopic user. In accordance with various embodiments, the plurality of light reflectors 420 may further provide adjustment for color to accommodate the user's environment.

According to various embodiments, the plurality of light reflectors 420 may cover 0.1 % to 50 % of the surface area of the entire lens 130, 130'. For example, the plurality of light reflectors 420 may cover 0.1 % to 40 %, or may cover 0.1 % to 30 % of the surface area of the entire lens 130, 130'. In other words, the ratio of the total surface area of the plurality of light reflectors 420 may be between, for example, 0.1 % to 30 % of the lens 130, 130'. A lower ratio (e.g. lower number of light reflectors 420) may provide the less visual distortion of the original image, while a higher ratio (e.g. higher number of light reflectors 420) may provide the user with more efficient myopic correction.

According to various embodiments, the density of the plurality of light reflectors 420 may vary across the various regions of the lens(es) 130, 130'. For example, the density at a bottom part of the lens(es) 130, 130' may be higher than the density at a top part of the lens(es) 130, 130'. In other words, the bottom part of the lens 130 may contain a larger number of light reflectors 420 when compared to the top part of the lens 130. This may be useful to the user as there may be higher usage at the bottom part of the lens 130 when the user may be writing or reading.

According to various embodiments, the plurality of light reflectors 420 may be arranged at different regions in the lens(es) 130, 130' to accommodate the various eye directions the user may adopt. For example, a first set of light reflectors 420 may be provided to reflect light when the user's eye direction is lowered (e.g. reading), and a second set may be provided to reflect light when the user's is looking forward (e.g. far vision). Accordingly, stimulation of the ON-pathway may always be provided regardless of the user's eye position.

According to various embodiments, the plurality of light reflectors 420 may be arranged on or in the lens(es) 130, 130' of the eyewear 100 to generate the light emission pattern 400. For example, the plurality of light reflectors 420 may be arranged on the surface of the lens(es) 130, 130' which may be facing the user's eye.

According to various embodiments, the plurality of light reflectors 420 may be directly inlaid (e.g. embedded) in the lens 130. For example, the plurality of light reflectors 420 may be encapsulated or enclosed in the lens 130 during the manufacturing process. According to one embodiment, the plurality of light reflectors 420 which may include prisms may be encapsulated by injection molding, casting, or the freeform cutting process. According to another embodiment, the plurality of light reflectors 420 which may include mirrors may be encapsulated by arranging the mirrors on the first half of the lens (e.g. using a mask with tilted spread angles), and subsequently adding the second half of the lens(es) 130, 130' to encapsulate the mirrors.

According to various embodiments, the precise placement of the plurality of light reflectors 420 on the lens 130 may be facilitated by an optical setup configured to record the light rays emitted from the source (e.g. original image) and the light emission pattern 400 (e.g. a holograph).

According to various embodiments, the light emission pattern 400 may be rotational and translational symmetry free. For example, the light source including one or more light emitters 410, and the plurality of light reflectors 420 may be arranged in a uniform manner to form a pattern set, and each pattern set may be repeated in a non-uniform manner on the lens(es) 130, 130'. For instance, a first pattern set may be spaced 1 mm apart from a second pattern set. A third set of patterns may be spaced narrower or further (e.g. ±10% variation, e.g. 0.9 mm or 1.1 mm) from the second pattern set. Thus, the light emission pattern 400 may include a plurality of pattern sets arranged on the lens(es) 130, 130'. Alternatively, the light source including the light emitters 410 and the light reflectors 420 may be randomly arranged. For example, the plurality of light reflectors 420 may not be aligned with each other, and may not be aligned with the light source including the one or plurality of light emitters 410. Since the light emission pattern 400 may be rotational and translational symmetry free, unwanted light diffraction may be avoided. Hence, the light emission pattern 400 may not disrupt or distort the original image but merely alter the contrast of the original image, allowing the user to easily recognize and decipher the content of the modified image.

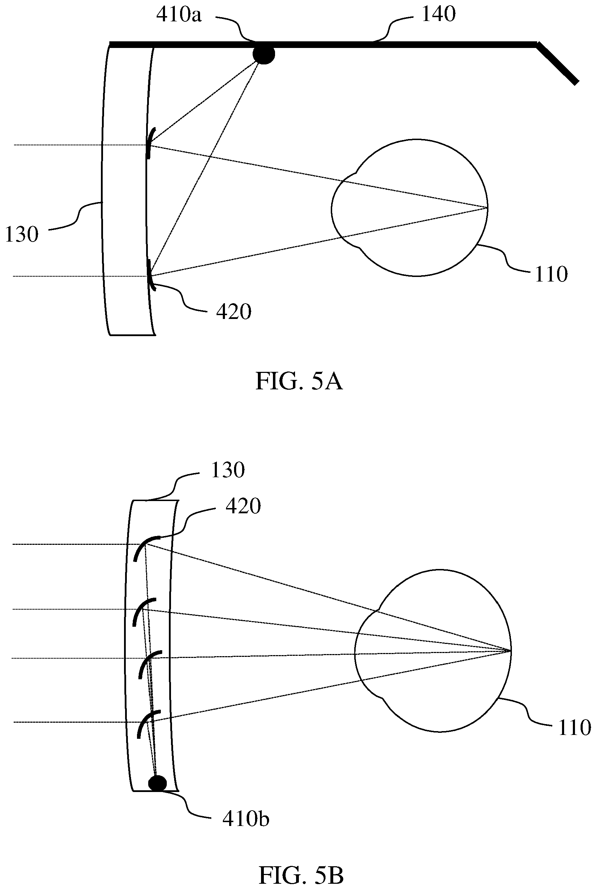

FIGS. 5A to 5C show exemplary non-limiting schematic illustrations of the various arrangements of the light source including one or the plurality of light emitters 410, and the plurality of light reflectors 420 on the eyewear 100, which may generate the light emission pattern 400.

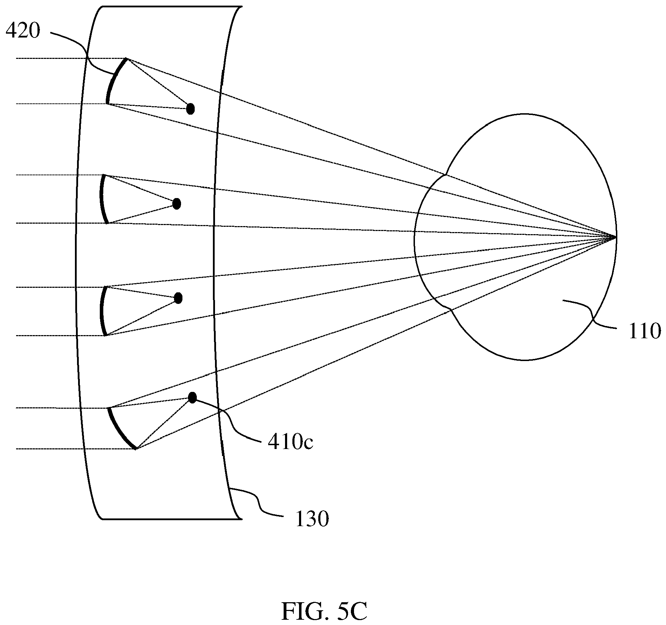

As shown in the example of FIG. 5A, the light source including one light emitter 410a may be provided on the frame 140 near the user's temple, and the plurality of light reflectors 420 may be arranged on the surface of the lens 130 facing the user's eye. In the example of FIG. 5B, the light source including one light emitter 410b may be directly inlaid at the base of the lens 130. The plurality of light reflectors 420 may also be directly inlaid in the lens 130. Further, as shown in the example of FIG. 5C, an equal number of light sources including the plurality of light emitters 410c and the plurality of light reflectors 420 may be provided. For example, each light reflector 420 may be illuminated by the light source including one light emitter 410c. In the examples provided by FIGS. 5A and 5B, the light source including one light emitter 410a may be sufficient to illuminate (e.g. high-powered LEDs) multiple light reflectors 420, and the reflectivity of the light reflectors 420 may be lowered. In the examples of FIGS. 5B and 5C, the light source including one or the plurality of light emitters 410 may be directly inlaid in the lens 130 and may therefore reduce the effects from unwanted disturbances. For example, the lens 130 may protect the light source including one or the plurality of light emitters 410 from smudging (e.g. by the user's fingerprints when handling the eyewear 100), or from stray strands of hair which may fall between the lens 130 and the user's eye 110. The arrangements shown in FIGS. 5A to 5C merely serve as examples, and other embodiments may be envisioned.

According to various embodiments, the eyewear 100 may include a sensor which may activate the light emission pattern 400. The sensor may be a motion sensor, for example, an accelerometer used to measure linear acceleration and tilt angles. Non-limiting examples of accelerometers include: single accelerometers and multi-axis accelerometers. For example, the accelerometer may detect a change in the head position of the user (e.g. lowered gaze during reading) and activate the light source including one or the plurality of light emitters 410 to illuminate the lens(es) 130, 130' to stimulate the ON-pathway of the user's visual system.

Advantageously, the light emission pattern 400 according to various embodiments of the disclosure may stimulate the ON-pathway of the user's visual system by inducing contrast polarity. The light emission pattern 400 may modify the user's visual environment by providing a stimulus which modifies (e.g. increases) the peripheral luminance and adjusts the contrast of the original image. For example, the light emission pattern 400 may provide small spot(s) on the retina of the user's eye 110 (e.g. long focal lengths) to stimulate the ON-pathway of the user's visual system. The small spots also retain details of the original image while stimulating the user's ON-pathway. In other words, the modified image provided to the user's eye may include the original image with the modification of a number of pixels within the original image. For example, the modified image may correspond to the original image having reversed contrast. Further, the light emission pattern 400 may be configured to provide myopic correction using reflectors with spherical power. The light emission pattern 400 may also stimulate the ON-pathway of the user's visual system by blurring (e.g. lower the high spatial frequency content) and/or altering (e.g. increasing or decreasing) the spatial frequency of the image portion(s). Accordingly, the light emission pattern 400 may provide a means for both myopic control and correction.

According to various embodiments, the eyewear 100 including the transmission pattern 300 and/or a light emission pattern 400 may be electronically passive. Advantageously, the ON-pathway of the user's visual system without the requirement of a power source, for example, through an external power supply or through batteries. The electronically passive eyewear 100 may therefore be mobile, since the user does not have to consider the requirements of a readily accessible external power source, or the need for replacement batteries.

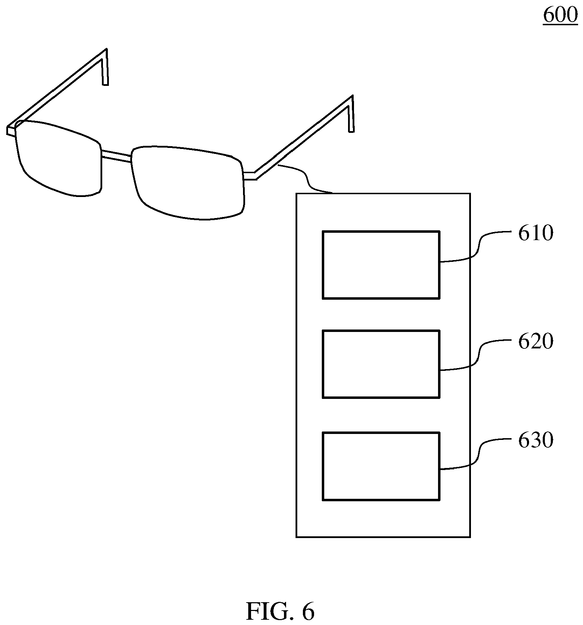

FIG. 6 shows a schematic diagram of an eyewear 100 in accordance with another embodiment, by way of example. The eyewear 100 may further include an image sensor 610, an image processing circuit 620, and an image projector 630. The eyewear 100 may be based on the eyewear 100 as described in relation to FIGS. 1A to 5C, and repeated descriptions will be omitted. The image sensor 610, image processing circuit 620, and the image projector 630 may be integrated on the eyewear 100. For example, the image sensor 610, image processing circuit 620, and the image projector 630 may be on the frame 140 of the eyewear 100, for instance, the front portion of the frame 140 of the eyewear 100. The image sensor 610 may be a sensor which detects the original image, and transmits the original image to the image processing circuit 620. The image processing circuit 620 may be configured to modify the original image to produce the modified image, for example, the image processing circuit 620 may include an algorithm to produce the modified image. In addition, the image processing circuit 620 may also be configured to control the light emission pattern 400, and to control when the modified images may be provided to the retina of the user's eye 110. The image processing circuit 620 may be further configured to transmit the modified image to the image projector 630. The image projector 630 may then project the modified image for the user to see the modified image when wearing the eyewear 100. For example, the image projector 630 may generate the light emission pattern 400.

According to various embodiments, the image sensor 610 may be connected to the image processing circuit 620. The image sensor 610 may be within a camera, for example, a digital camera which is located at the front portion of the frame 140. The lens of the camera may focus and direct incoming light emitted from the original image onto the image sensor 610. For example, the image sensor 610 may include millions of pixels to sense light, and may further include a mosaic of color filters to sense the different colors from the original image. For instance, the image sensor 610 may include red, blue, green, yellow filters. The image sensor 610 may be a solid-state device which converts the light waves into electrical signals to form a digital image of the original image. For example, the image sensor 610 may include a charge-coupled sensor (e.g. CCD), an active-pixel sensor (e.g. CMOS sensor), LiveMOS sensors. The image sensor 610 may transmit the digital image of the original image to the image processing circuit 620.

According to various embodiments, a circuit may include analog circuits or components, digital circuits or components, or hybrid circuits or components. Any other kind of implementation of the respective functions which will be described in more detail below may also be understood as a "circuit" in accordance with an alternative embodiment. A digital circuit may be understood as any kind of a logic implementing entity, which may be special purpose circuitry or a processor executing software stored in a memory, firmware, or any combination thereof. Thus, in various embodiments, a "digital circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "digital circuit" may also include a processor executing software, e.g. any kind of computer program, e.g. a computer program using a virtual machine code such as e.g. Java.

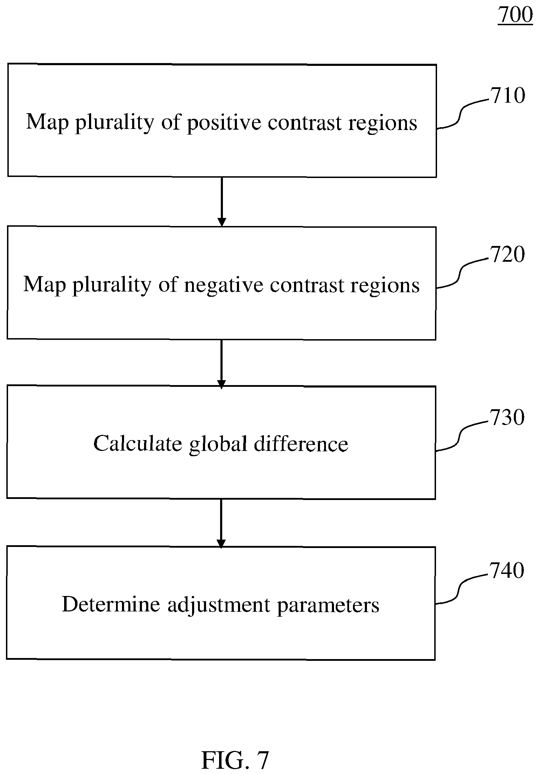

FIG. 7 illustrates an example of an algorithm 700 which may be implemented by the image processing circuit 620, according to various embodiments. The algorithm may be implemented to produce the modified image. The algorithm 700 may include, in step 710, the mapping of a plurality of positive contrast regions within the original image. For example, the contrast of the center and the surroundings of a region within the original image may be measured, and the relative contrast of the center and the surroundings of a region may be represented as a "measured positive contrast threshold". The measurement may be performed in a pre-determined spatial frequency range, e.g., from 0.1 cycles per degree of visual angle (cpd) to 60 cpd, for example, from 0.5 cpd to 30 cpd. A positive contrast region may be mapped when the measured positive contrast threshold exceeds a pre-determined positive contrast threshold. FIGS. 2A and 2C provide examples of positive contrast regions. In other words, the plurality of positive contrast regions may stimulate the ON-pathway of the visual system.

The algorithm 700 may further include, in step 720, the mapping of a plurality of negative contrast regions within the original image. For example, the contrast of the surroundings and the center of a region within the original image may be measured, and the relative contrast of the surroundings and the center of a region may be represented as a "measured negative contrast threshold". The measurement may be performed in a pre-determined spatial frequency range, e.g., from 0.1 cpd to 60 cpd, for example, from 0.5 cpd to 30 cpd. A negative contrast region may be mapped when the measured negative contrast threshold exceeds a pre-determined negative contrast threshold. FIGS. 2B and 2D provide examples of negative contrast regions. In other words, the plurality of negative contrast regions may stimulate the OFF-pathway of the visual system.

According to various embodiments, the mapping of the plurality of positive contrast regions and negative contrast regions may be provided by implementing an edge detection algorithm on the original image. The edge detection algorithm may have a pre-determined kernel size. For example, the edge detection algorithm may include a Laplacian of Gaussian (LoG) filter. The LoG filter may highlight regions of rapid intensity change, and provide edge detection in the original image. As the Laplacian filter may be sensitive to noise, certain regions of the original image may be smoothed by the application of a Gaussian filter before the application of the Laplacian filter.

The algorithm 700 may include, in step 730, the calculation of the modified image by modifying the original image on the plurality of positive contrast regions or on the plurality of negative contrast regions, to obtain a global difference of a first global ratio GR1 to a second global ratio GR2. For example, the modified image may be calculated by modifying the plurality of regions which stimulate the ON-pathway (e.g. light stimulus on dark background, and/or image portions of low spatial frequency). As a further example, the modified image may be calculated by modifying the plurality of regions which stimulate the OFF-pathway (e.g. dark stimulus on light background, and/or image portions of high spatial frequency). For example, the modified image may include a target modified image, which may correspond to the original image including an equal or higher proportion of positive contrast regions, as compared to the negative contrast regions. For instance, the modified image may include the complete contrast reversal of the original image. As a further example, the target modified image may correspond to the original image including image portion(s) which may be blurred (e.g. lower high spatial frequency content). In other examples, the target modified image may correspond to the original image including image portion(s) with altered spatial frequency. For instance, the spatial frequency of image may be increased. In another example, the spatial frequency of the image may be decreased. The target modified image may be stored on the eyewear 100, for example, within a storage provided on the eyewear 100. According to various embodiments, the modified image may be a superposition of the original image and the target modified image.

Step 730 may also be configured to obtain the first global ratio GR1, which may be defined as a difference between a sum of contrast of the plurality of positive contrast regions ∑PCR*_{orig}* and a sum of contrast of the plurality of negative contrast regions ∑NCR*_{orig}* of the original image. For example, the aggregate of the positive contrast region(s) which stimulate the ON-pathway (e.g. mapped in step 710), and the aggregate of the negative contrast regions which stimulate the OFF-pathway (e.g. mapped in step 720) may be obtained. The difference between the sum of contrast of the plurality of positive contrast regions ∑PCR*_{orig}* and a sum of contrast of the plurality of negative contrast regions ∑NCR*_{orig}* of the original image may be determined to obtain the first global ratio GR1. In other words, the first global ratio GR1 represents the difference between all regions which stimulate the ON-pathway and all regions which stimulate the OFF-pathway within the original image, e.g., GR1 = ∑PCR*_{orig}* - ∑NCR*_{orig}*.

Step 730 may also be configured to obtain the second global ratio GR2, defined as a difference between a sum of contrast of the plurality of positive contrast regions ∑PCR*_{mod}* and a sum of contrast of the plurality of negative contrast regions ∑NCR*_{mod}* of the modified image. The sum of positive contrast regions ∑PCR*_{mod}* and negative contrast regions ∑NCR*_{mod}* may be mapped as described in steps 710 and 720 in the modified image, and the aggregate of positive contrast regions which stimulate the ON-pathway, and the aggregate of negative contrast regions which stimulate the OFF-pathway of the modified image may be obtained. The difference between the sum of the positive contrast regions ∑PCR*_{mod}* and negative contrast regions ∑NCR*_{mod}* of the modified image may be determined to obtain the second global ratio GR2. In other words, the second global ratio GR2 represents the difference between all regions which stimulate the ON-pathway and all regions which stimulate the OFF-pathway of the visual system, of the modified image, e.g., GR2 = ∑PCR*_{mod}* - ∑NCR*_{mod}*.

At step 730, the algorithm 700 may further include the determination of the global difference, which may be defined as the difference between the first global ratio G1 and the second global ratio G2, e.g., global difference = GR1 - GR2. In other words, the global difference may be a comparison between the sum of the plurality of positive contrast regions ∑PCR*_{orig}* and sum of the plurality of negative contrast regions ∑NCR*_{orig}* of the original image, as compared to the sum of the plurality of positive contrast regions ∑PCR*_{mod}* and sum of the plurality of negative contrast regions ∑NCR*_{mod}* of the modified image. The global difference may be used to obtain parameters to determine the changes that has to be made to the original image to produce the desired modified image. For example, the original and modified images are compared such that the image processing circuit 620 may determine what has to be adjusted in the eyewear 100 to produce the desired modified image.

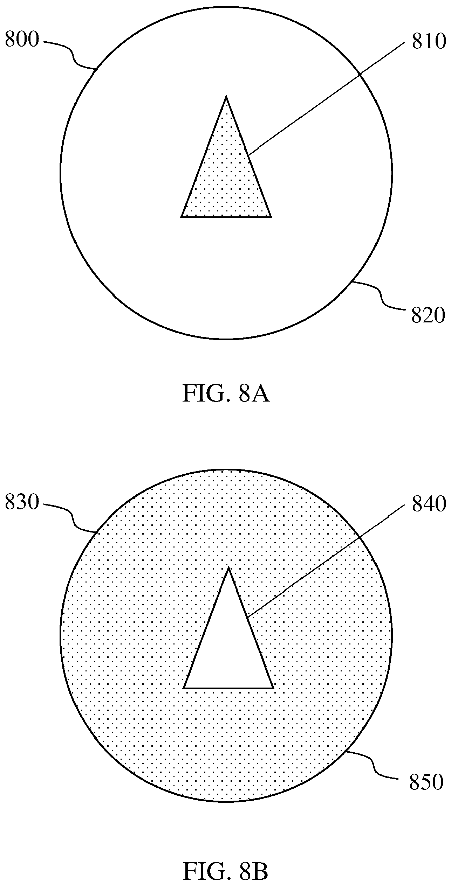

Based on the global difference obtained at step 730, at step 740, the algorithm 700 may include the calculation of adjustment parameters for the further modification of the original image. The adjustment parameters may include parameters to modify the original image to produce the desired modified image. FIGS. 8A to 9C show illustrations of the adjustment parameters which may be used to obtain the modified image, by way of example, and will be explained below.

FIG. 8A may represent a region 800 within the original image, and may represent a positive contrast region or a negative contrast region. The region 800 may include a center 810 of the region, and may also include the surrounding area 820 which may encircle the center 810. According to various embodiments, an adjustment parameter may include modifying the light intensity of the center 810 of the region. For example, the light intensity of the center 810 of the region may be modified to be brighter, or may be modified to be darker, such that the difference in the contrast between the center 810 and surrounding area 820 may be reduced. As a further example, a negative contrast region may be changed into a positive contrast region.

FIG. 8B may represent a region 830 within the original image, and may be a positive contrast region or a negative contrast region. The region 830 may include a center 840 of the region, and may also include the surrounding area 850 which may encircle the center 840. According to various embodiments, an adjustment parameter may include modifying the light intensity of the surrounding area 850 of the region. For instance, the light intensity of the surrounding portion 850 may be modified to be brighter, or may be modified to be darker, such that the difference in the contrast between the center 840 and surrounding area 850 may be reduced. As a further example, a negative contrast region may be changed into a positive contrast region.

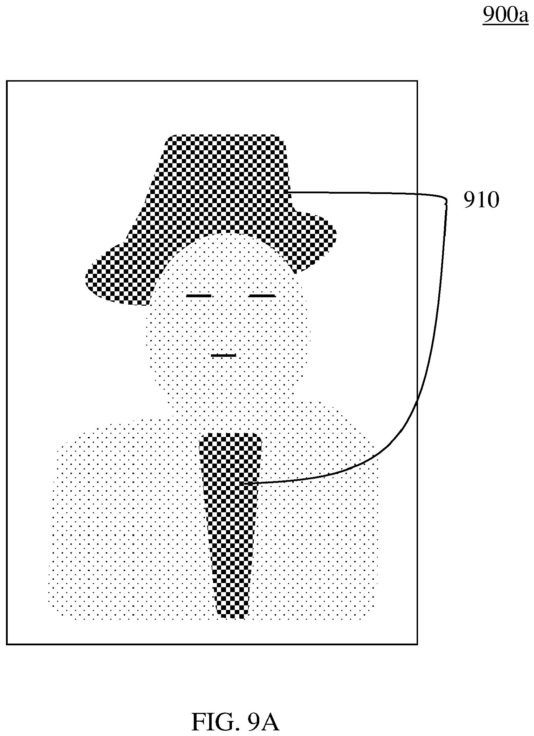

According to various embodiments, an adjustment parameter may include the blurring (e.g. lower high spatial frequency content) of the positive contrast region, or the negative contrast region. For example, the border of the positive contrast region or the negative contrast region may be blurred to reduce the difference in contrast between said region and the surrounding parts of the image, as will be explained with reference to FIGS. 9A to 9C. As a further example, image interpolation algorithms may be applied to the edges surrounding the positive or negative contrast regions to blur said edges.

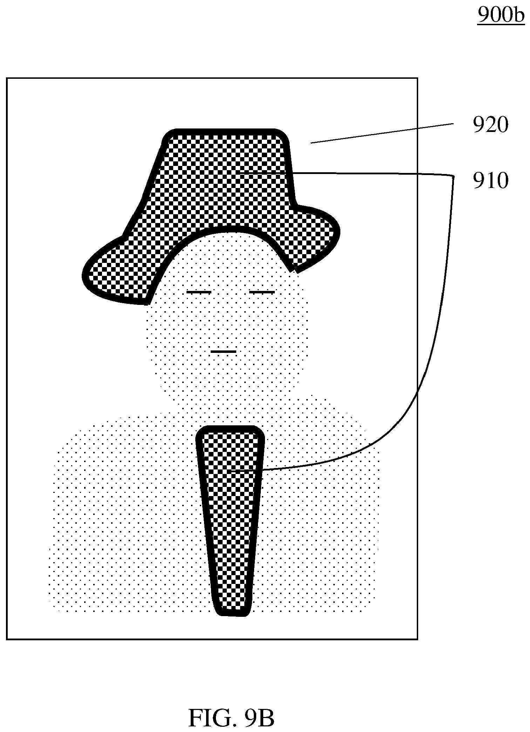

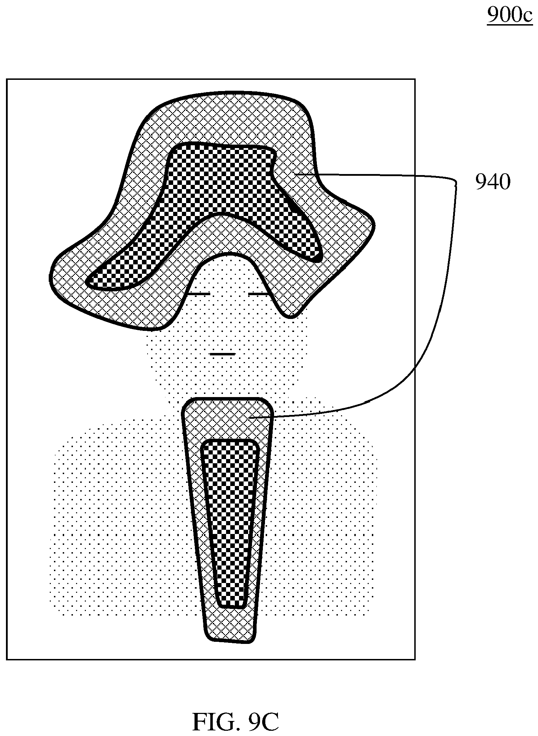

FIG. 9A to 9C show illustrations of the modification of an image by the image processing circuit 620, by way of example. FIG. 9A may represent an original image 900a, FIG. 9B may represent the original image including the mapping of a plurality of negative contrast regions 900b, and FIG. 9C may represent the modified image 900c. The original image 900a may include negative contrast regions 910 (e.g. dark stimulus on light background). For example, the negative contrast regions 910 may include the man's hat and the tie in the original image 900a. Referring to FIGS. 6, 7 and 9B, the image processing circuit 620 may be configured to map the plurality of negative contrast region in the original image 900a at step 720. A negative contrast region 910 may be mapped if the negative contrast region 910 in the original image 900a may have a contrast of the surroundings to their center exceeding a pre-determined negative contrast threshold. For example, the contrast of the area surrounding the hat 920, to the contrast to of the hat 910 itself (e.g. center) may be exceed the pre-determined negative contrast threshold, and thus, the negative contrast region may be mapped. A similar process may be performed to map the remaining negative contrast region in the original image 900a (e.g. tie region as mapped in image 900b). The image processing circuit 620 may be further configured to obtain the global difference at step 730 and calculate the adjustment parameter based on said global difference at step 740. An adjustment parameter may include blurring (e.g. lower high spatial frequency content) of the negative contrast region, in accordance with various embodiments. As shown in the modified image 900c of FIG. 9C, the edges bordering the negative contrast regions 910 may be blurred 940 and may therefore reduce the difference in contrast between the negative contrast region 910 and the area surrounding the negative contrast region 920. The border around the blurred areas 940 are provided solely for illustration purposes.

According to various embodiments, the modified image may correspond to the original image having a modified (e.g. increased) positive contrast. For example, the modified image may correspond to the original image having image portion(s) of respective positive contrast region(s). For instance, the modified image may include an equal or higher proportion of positive contrast regions, as compared to the proportion of negative contrast regions in the modified image. As a further example, the modified image may correspond to the original image having reversed contrast. The modified (e.g. increased) positive contrast may also be provided by altering (e.g. increasing or decreasing) the spatial frequency, and/or the blurring (e.g. lower high spatial frequency content) of either the negative contrast region, or the positive contrast region, in accordance with various embodiments. Accordingly, when the user is wearing the eyewear 100, the ON-pathway of the user's visual system may be stimulated.

According to various embodiments, the image processing circuit 620 may modify certain portions of the original image. For example, instead of modifying all the positive contrast regions, or negative contrast regions in the original image, the image processing circuit 620 may be configured to only modify the periphery a positive contrast region, or of a negative contrast region in the original image. As a further example, contrast reversal, the alteration (e.g. increasing or decreasing) of spatial frequencies, and/or the blurring (e.g. lower high spatial frequency content) of the positive or negative contrast regions may be provided in the outer 20 degrees of the visual angle of the original image. As such, the image processing circuit 620 may not disrupt or distort the original image but merely alter certain portions of the original image, allowing the user to easily see and decipher the content of the modified image.

According to various embodiments, the eyewear 100 may further include an image projector 630. The image projector 630 may include an optical device connected to the image processing circuit 620 to project the modified image (or moving modified images) in real-time. For example, the image projector 630 may be a digital image projector which use lasers to project the modified image to stimulate the ON-pathway of the user's visual system. The image projector 630 may project the modified image onto a projection screen, for example, on the lens(es) 130, 130' of the eyewear 100. The image projector 630 may further include a retinal projector (e.g. virtual retinal display) which may project the modified image directly on the retina of the user's eye 110. Non-limiting examples of image projectors include: liquid crystal display projectors, Liquid Crystal on Silicon projectors, digital light processing projectors. According to various embodiments, the image projector 630 may generate the light emission pattern 400.

According to various embodiments, the image processing circuit 620 may be further configured to control the light intensity pattern 160, for example, the light emission pattern 400. Referring to FIGS. 5A to 6, in some embodiments, the image processing circuit 620 may keep the light source deactivated (or the light source may be omitted altogether), such that the modified image may be projected onto clear len(es) 130, 130' in accordance with various embodiments. Alternatively or in addition, the image processing circuit 620 may be configured to activate the light source comprising one or the plurality of light emitters 410a, 410b, 410c such that the modified image may be produced using the light emission pattern 400 and/or by the image processing circuit 620.

According to various embodiments, the image processing circuit 620 may be configured to control when modified images may be provided to the user. For example, the image processing circuit 620 may be activated to provide the modified images when the ratio of the ON- to OFF-pathways (ON/OFF ratio) falls below a pre-determined ON/OFF threshold, and may be deactivated once the ON/OFF ratio is greater than the pre-determined threshold (e.g. when the ON-pathway dominates, or when the ON- and OFF-pathways are balanced). According to various embodiments, the image processing circuit 620 may also be activated or deactivated after a pre-determined duration threshold.

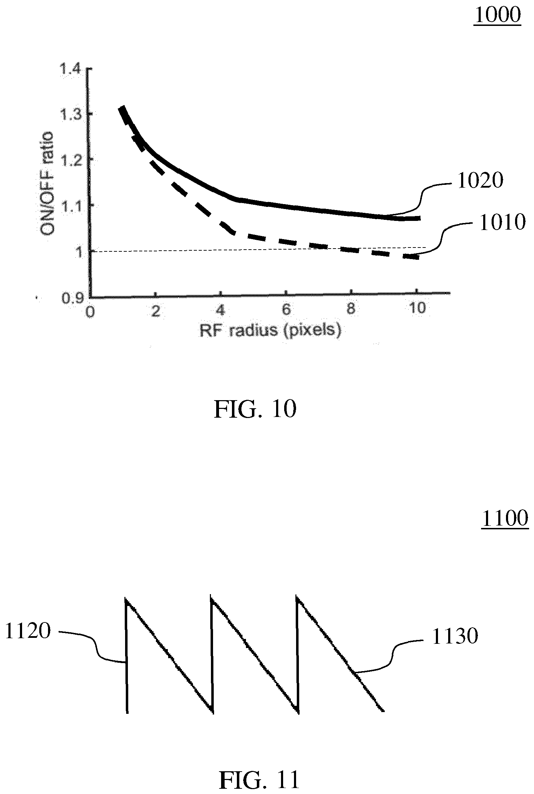

FIG. 10 shows a graph 1000 of an example of a mechanism to determine the pre-determined ON/OFF threshold. The x-axis of graph 1000 may represent radial frequency (RF radius, measured in pixels), which may be a measure of the granularity of an image. For example, a higher RF radius (e.g. > 5 pixels) may represent regions of lower spatial frequencies (e.g. coarse detail), and a lower RF radius (e.g. ≤ 5 pixels) may represent regions of higher spatial frequencies (e.g. fine, sharp detail) within an image. The radius threshold of 5 pixels is used to illustrate the embodiments, however another pre-determined radius threshold may be used, e.g., selected to be greater than 2 pixels. The y-axis of graph 700 may represent the ON/OFF ratio of the image. For example, an image may contain regions which stimulate both the ON- and OFF-pathways of the visual system. A higher ON/OFF ratio (e.g. > 1) may indicate that the image contains a higher proportion of regions which stimulate the ON-pathway, as compared to regions which stimulate the OFF-pathway (e.g. ON-pathway dominates). Conversely, a lower ON/OFF ratio (e.g. < 1) may indicate that an image contains a lower proportion of regions which stimulate the ON-pathway, as compared to regions which stimulate the OFF-pathway (e.g. OFF-pathway dominates). Curves 1010 and 1020 may represent the ON/OFF ratio at varying RF radius within an indoor and outdoor setting, respectively. Graph 1000 suggests that visual images in an outdoor setting (e.g. curve 1020) provide higher ON/OFF ratios, when compared to visual images in an indoor setting (e.g. curve 1010). For example, the pre-determined ON/OFF threshold which may be used by the image processing circuit 620 to start the modification of images may be the ON/OFF threshold of 1.5. To illustrate, the image processing circuit 620 may be activated to provide the modified images once the ON/OFF ratio of the original image falls below 1.5, and may be deactivated and stop providing the modified image once the ON/OFF ratio of the original image exceeds 1.5.

According to various embodiments, the pre-determined ON/OFF threshold may be user-specific, for instance, based on the severity of a myopic user, the myopigenic risk of the user, or on environmental factors. For example, the ON/OFF threshold may be higher (e.g. ≥ 1.6) for a myopic user, or for a user having genetic predisposition to myopia. As a further example, the ON/OFF threshold may be higher (e.g. ≥ 1.8) for a user who mainly spends his or her time indoors.

According to various embodiments, the eyewear 100 may continuously monitor the ON- and OFF- pathways of the original images that the user sees, for example, by estimating the ON- and OFF- pathways stimulus according to the original image. As a further example, the image sensor 610 may continuously transmit the original images in real-time, to the image processing circuit 620 for the mapping of the positive contrast regions and the negative contrast regions (e.g. steps 710 and 720 of FIG. 7). The image processing circuit 620 may be configured to modify the original images if the ON/OFF ratio falls below the pre-determined ON/OFF threshold. In other words, the image processing circuit 620 may be configured to provide the modified image (e.g. perform steps 730 and 740 of FIG. 7) if the ON/OFF threshold is lower than the pre-determined ON/OFF threshold. According to various embodiments, the image processing circuit 620 may stop providing the modified images once the ON/OFF ratio exceeds the pre-determined ON/OFF threshold.

Examples of the various eyewear 100 control parameters according to the ON/OFF threshold and/or a pre-determined duration will be provided below, in accordance with various embodiments.

According to various embodiments, the image processing circuit 620 may constantly provide the modified images when the user is wearing the eyewear 100. For example, the image processing circuit 620 may provide the modified images regardless of whether the user is engaging in activities which are predominantly ON- or OFF-pathway dominant. Therefore, the ON-pathway of the user's visual system may constantly be stimulated. This may be beneficial for users with severe myopia as the continuous ON-pathway stimulation may slow the progression of myopia for the user.

According to various embodiments, the image processing circuit 620 may provide the modified images for a pre-determined duration when the user engages in an activity which predominantly stimulates the OFF-pathway. For example, when the user starts to play a computer game (e.g. OFF-pathway dominant), the image processing circuit 620 may be configured to provide the modified images for the first 15 minutes of the computer game.

According to various embodiments, the ON/OFF ratio when the user engages in an activity which stimulates the OFF-pathway (e.g. reading classical black-on-white text) may fall below the pre-determined ON/OFF ratio, and the image processing circuit 620 may be configured to immediately provide the modified images. The image processing circuit 620 may stop modifying the original images immediately when the user stops reading and engages in an activity which may provide a balance between the ON- and OFF-pathways, or an activity which preferentially stimulates the ON-pathway.

According to various embodiments, the ON/OFF ratio when the user engages in an activity which stimulates the OFF-pathway may fall below the pre-determined ON/OFF ratio, and the image processing circuit 620 may be configured to provide the modified images after a pre-determined duration, for example, 10 minutes after the user commences the activity. The image processing circuit 620 may stop modifying the original images immediately when the user stops reading and engages in an activity which may provide a balance between the ON- and OFF-pathways, or an activity which preferentially stimulates the ON-pathway.

According to various embodiments, the image processing circuit 620 may be configured to provide the modified images over a time window. For example, when the user engages in an activity which predominantly stimulates the OFF-pathway, the modified images may be provided over a time window to avoid abrupt contrast reversal, altered (e.g. increased or decreased) spatial frequency, and/or the blurring (e.g. lower high spatial frequency content) of said images. For instance, the user may see both the original and modified images during the first 15 minutes after the user commences an activity which predominantly stimulates the OFF-pathway.

According to various embodiments, the image processing circuit 620 may be configured to provide the modified images according to a periodic contrast pattern. FIG. 11 shows a graph 1100 of the periodic contrast reversal in accordance with various embodiments, by way of example. Line 1120 may represent when the image processing circuit 620 starts to modify the images, for example, when the ON/OFF ratio falls below the pre-determined ON/OFF threshold (e.g. OFF-pathway dominant). Line 1130 may represent the slowing of the provision of the modified images. In other words, the image processing circuit 620 may be configured to immediately provide the modified images, and to slow the provision of modified images to the user over a time window. For example, line 1120 may represent the duration when the user only sees the modified image, line 1130 may represent the duration when the user sees both the original and modified images. The periodic contrast reversal may be repeated as long as the user engages in activities which predominantly stimulate the OFF-pathway. According to various embodiments, the frequency of the period contrast reversal may range from 0.5 Hz to 2 Hz, for example, 0.5 Hz to 1 Hz.

According to various embodiments, the eyewear 100 may further include a light sensor. The light sensor may measure illuminance, namely, the brightness of a light source. For example, the light sensor may detect if the user may be in an outdoor or indoor setting. For instance, outdoor settings may provide a higher illuminance (e.g. > 1000 lux), as compared to indoor settings (e.g. < 1000 lux). Non-limiting examples of light sensors include: photovoltaic cell, phototransistor, photoresistor, phototube, photodiode. The light sensor may be connected to the image processing circuit 620, and the image processing circuit 620 may be configured to provide the modified images when it detects that the user is indoor (e.g. measured luminance of < 1000 lux).

According to various embodiments, the eyewear 100 may further include a detection means (e.g. a determination circuit) which may detect if the user is within an outdoor or indoor setting. The inherent statistical structure of natural images in the outdoor setting may differ to images in the indoor setting. The eyewear 100 may include such detection means, and the image processing circuit 620 may be configured to provide the modified images when it detects that the user is indoors. Accordingly, modified images which stimulate the ON-pathway may only be provided in the indoor setting.

Advantageously, the eyewear 100 including the image sensor 610, image processing circuit 620, and the image projector 630 may provide real-time analysis of the visual environment, by providing immediate, real-time recognition and input on the proportions of positive contrast regions and the proportion of negative contrast regions in the original image. For example, the image processing circuit 620 may provide input on the relative strengths of the regions which stimulate the ON-pathway and the OFF-pathway in the original image. The image processing circuit 620 may also provide the modified image, which may contain an equal or higher proportion of positive contrast regions, as compared to the negative contrast regions, such that the ON-pathway of the user's visual system may be stimulated. In addition, contrast reversal, the alteration (e.g. increasing or decreasing) of spatial frequencies, and/or the blurring (e.g. lower high spatial frequency content) of regions may be applied only on certain parts or regions of the original image, and therefore may not impede the interpretation of the original image. This may be particularly beneficial for complex images (e.g. maps, weather charts, graphs) where the complete contrast reversal, altered (e.g. increased or decreased) spatial frequencies, and/or the blurring of the whole image would make it difficult for the user to interpret the content of the original image. Accordingly, the eyewear 100 may advantageously stimulate the ON-pathway of the user's visual system and allow the user to easily recognize and decipher the content of the image. The eyewear 100 may further prevent the onset of myopia for an emmetropic user, or control myopia progression for a myopic user.

Several examples of the disclosure refer to control of myopia and increase of ON-pathway stimulation as compared to OFF-pathway stimulation of the human eye, for example, wherein the light adjusting means may be configured to provide an increased amount of positive contrast signal and/or a decreased amount of negative contrast signal. The present disclosure also envisages embodiments (e.g., of an eyewear) to control hyperopia, by an increase of OFF-pathway stimulation as compared to ON-pathway stimulation, for example, wherein the light adjusting means may be configured to provide a decreased amount of positive contrast signal and/or an increased amount of negative contrast signal.

While the disclosure has been particularly shown and described with reference to specific embodiments, it should be understood by those skilled in the art that various changes in form and detail may be made therein. The scope of the disclosure is thus indicated by the appended claims and all changes which come within the meaning and range of equivalency of the claims are therefore intended to be embraced.

## Claims

1. An eyewear (100) for a user seeing an image when wearing the eyewear, comprising:
a light adjusting means (120) configured to provide a projection light (150) which is perceived by a user's eye (110) when facing a first surface of the light adjusting means (120), such that the user sees a modified image which is modified from an original image;
wherein the light adjusting means (120) is configured to provide a modified amount of positive contrast signal, for a retina of an eye of the user (110), in the modified image as compared to the original image.

2. The eyewear (100) of claim 1, wherein the modified amount of positive contrast signal is provided by a light intensity pattern (160) adjustment, produced by a transmission pattern (300) on at least one lens (130) of the eyewear (100).

3. The eyewear (100) of claim 2,
wherein the transmission pattern (300) comprises a plurality of minority regions (310) of higher transmission than a remaining majority region (320).

4. The eyewear (100) of claim 3,
wherein the plurality of minority regions (310) are formed as through holes in the lens (130).

5. The eyewear (100) of claim 3,
wherein the plurality of minority regions (310) differ from the majority region (320) by coating.

6. The eyewear (100) of any one of claims 1 to 5,
wherein the modified amount of positive contrast signal is provided by the light intensity pattern (160) adjustment, produced by a light emission pattern (400).

7. The eyewear (100) of claim 6,
wherein the light adjusting means (120) comprises a light source comprising one or a plurality of light emitters (410) arranged on the eyewear (100) for generating the light emission pattern (400).

8. The eyewear (100) of claim 7,
wherein the light adjusting means (120) comprises a plurality of light reflectors (420) for generating the light emission pattern (400) by reflecting the light from said one or plurality of the light emitters (410).

9. The eyewear (100) of claim 8,
wherein the plurality of light reflectors (420) are selected from prism, mirror and liquid crystal.

10. The eyewear (100) of claim 7 to 9, wherein the eyewear (100) comprises an image projector (630) to generate the light emission pattern (400).

11. The eyewear (100) of claim 10,
wherein the eyewear (100) further comprises an image sensor (610) and an image processing circuit (620), and optionally,
wherein the image processing circuit (620) is configured to map a plurality of positive contrast regions of the original image (710), each of the plurality of positive contrast regions having a contrast of a center to its surroundings exceeding a pre-determined positive contrast threshold.

12. The eyewear (100) of claim 11,
wherein the image processing circuit (620) is configured to map a plurality of negative contrast regions of the original image (720), each of the plurality of negative contrast regions having a contrast of surroundings to their center exceeding a pre-determined negative contrast threshold.

13. The eyewear (100) of claim 11,
wherein the image processing circuit (620) is configured to map a plurality of negative contrast regions of the original image (720), each of the plurality of negative contrast regions having a contrast of surroundings to their center exceeding a pre-determined negative contrast threshold,
wherein the image processing circuit (620) is configured to calculate the modified image by modifying the image on the plurality of positive contrast regions or on the plurality of negative contrast regions, to obtain a global difference (730) of a first global ratio (GR1) to a second global ratio (GR2),
wherein the first global ratio (GR1) is defined as a difference between a sum of contrast of the plurality of positive contrast regions and a sum of contrast of the plurality of negative contrast regions of the original image,
and the second global ratio (GR2) is defined as a difference between a sum of contrast of the plurality of positive contrast regions and a sum of contrast of the plurality of negative contrast regions of the modified image.

14. The eyewear (100) of claim 13,
wherein the image processing circuit (620) is configured to calculate adjustment parameters (740) based on the global difference of the first global ratio (GR1) to the second global ratio (GR2).

15. The eyewear (100) of any one of claims 1 to 14,
wherein the modified image corresponds to the original image having reversed contrast.
